# EUROPÄISCHE PATENTSCHRIFT

(11) **EP 2 411 226 B1**
(45) Veröffentlichungstag und Bekanntmachung des Hinweises auf die Patenterteilung: **10.01.2018**
(21) Anmeldenummer: 10704747.4
(22) Anmeldetag: 05.02.2010
(51) Int. Cl.: B41C 1/04, B44C 5/04, H04N 1/60

(54) **VERFAHREN ZUR HERSTELLUNG VON PLATTENKÖRPERN MIT IM TIEFDRUCKVERFAHREN BEDRUCKTEN DRUCKBÖGEN**
METHOD FOR PRODUCING BOARD BODIES WITH PRINTED SHEETS
PROCÉDÉ DE FABRICATION DE CORPS DE PLAQUES DOTÉS DE FEUILLES IMPRIMÉES

(30) Priorität: 24.03.2009 EP 09004180; 30.04.2009 EP 09005988
(43) Veröffentlichungstag der Anmeldung: 01.02.2012
(73) Patentinhaber: Parador GmbH, 48653 Coesfeld (DE); Flooring Industries Limited, SARL, 8070 Bertrange (LU)
(72) Erfinder: TÜNTE, Udo, 46348 Raesfeld (DE); PETERSEN, Frank, 48653 Raesfeld (DE)
(74) Vertreter: Von Rohr Patentanwälte Partnerschaft mbB
(86) Internationale Anmeldenummer: PCT/EP2010/000709
(87) Internationale Veröffentlichungsnummer: WO 2010/108568

(56) Entgegenhaltungen:
- EP-A1- 0 054 405
- EP-A1- 1 858 244
- EP-A2- 0 675 636
- WO-A1-2008/110275
- DE-A1- 19 947 397
- DE-A1-102008 031 735
- US-A- 5 283 671
- RODRIGUEZ M ED - INSTITUTE OF ELECTRICAL AND ELECTRONICS ENGINEERS: "A graphic arts perspective on RGB-to-CMYK conversion" PROCEEDINGS OF THE INTERNATIONAL CONFERENCE ON IMAGE PROCESSING. (ICIP). WASHINGTON, OCT. 23 - 26, 1995; [PROCEEDINGS OF THE INTERNATIONAL CONFERENCE ON IMAGE PROCESSING. (ICIP)], LOS ALAMITOS, IEEE COMP. SOC. PRESS, US LNKD- DOI:10.1109/ICIP.1995.53, Bd. 2, 23. Oktober 1995 (1995-10-23), Seiten 319-322, XP010197089 ISBN: 978-0-7803-3122-8

## Beschreibung

Die Erfindung betrifft eine Vorrichtung zur Durchführung eines Verfahrens zur Herstellung von Plattenkörpern zur Verwendung im Boden-, Wand- oder Deckenbereich, wie Paneelen, sowie im Möbelbereich.

Die Herstellung von Plattenkörpern im sogenannten Dekortiefdruckverfahren sind bereits seit Jahrzehnten bekannt. Im Dekortiefdruck, wo eine Vielzahl von Farben und Farbmischungen zum Einsatz kommen, besteht die Druckform in der Regel aus mehreren Druckzylindern mit jeweils einer Kupferbeschichtung mit einer oder mehreren Kupferschichten. Die Zylinder können eine Breite von mehreren Metern und einen Durchmesser von bis zu 1,6 m haben. In die äußere Kupferschicht wird das Druckbild in Form sogenannter Näpfchen eingraviert. Die äußere Kupferschicht kann im übrigen verchromt werden, um eine bessere Haltbarkeit zu erreichen. Dies wird vor allem in höheren Auflagenbereichen genutzt. Die Art der Gravur im Tiefdruck ermöglicht in der Regel eine exakte und zuverlässige Wiederholbarkeit des Druckergebnisses. Zur Herstellung großer Mengen an bedrucktem Druckpapier ist das Dekortiefdruckverfahren derzeit das einzig wirtschaftliche Druckverfahren.

Nach dem Tiefdrucken wird das mit dem Dekor bedruckte Druckpapier in der Regel beharzt und dann in Druckbögen geschnitten. Anschließend werden die Druckbögen mit vorbereiten Grundkörpern verpreßt. Hierzu werden üblicherweise Kurztaktpressen (KT-Pressen) eingesetzt.

Die Erstellung von mehrfarbigen Dekoren, beispielsweise von bestimmten Holzmaserungen, mit bestimmten Farben ist ausgesprochen aufwendig und mit einer Vielzahl von Arbeitsschritten verbunden. Zunächst einmal wird üblicherweise eine Dekorvorlage vorbereitet. Hiermit ist das Erstellen eines Dekorbildes gemeint. Bei einem bestimmten Holzdekor werden dabei beispielsweise bestimmte Maserungen mit unterschiedlichen Schattierungen sowie entsprechende Astansätze oder dergleichen dargestellt. Nach Erstellung der Vorlage wird diese eingescannt. Es erfolgt dann eine Überarbeitung der Vorlage am Rechner. Ist die Vorlage des Designs am Rechner erstellt, wird üblicherweise ein Proof hergestellt, der dem Kunden, der die Vorlage bestellt hat, vorgestellt wird. Findet der Proof die Zustimmung des Kunden, werden aus den RGB-Daten des RGB-Farbsystems einzelne Farbkanäle für die Tiefdruckeinrichtung herausgezogen. Man spricht hier von Separation. Üblicherweise besteht das Dekor aus drei Mischfarben, so dass drei Farbkanäle erstellt werden. Dabei ist jeder Farbkanal einem Druckzylinder zugeordnet.

Da die Gravur von Produktions-Tiefdruckzylindern mit einem erheblichen Aufwand verbunden ist, ist es in den Druckereien üblich, das Tiefdruckergebnis zunächst im Labormaßstab zu erstellen. Hierzu dienen kleinere Tiefdruckmaschinen, die Laborzylinder aufweisen. Die Laborzylinder sind erheblich kleiner als die Produktionszylinder. Nach der Gravur der Laborzylinder werden die gewünschten Farben für die einzelnen Farbkanäle ausgewählt. Anschließend erfolgt ein Tiefdruck im Labormaßstab. Von dem Druckergebnis wird ein Stück Druckpapier als Labor-Druckbogen ausgeschnitten, der dann beharzt wird. Nach dem Beharzen wird der Labor-Druckbogen auf einem Grundkörper eines Plattenkörpers mit einer Laborpresse aufgepreßt. Anschließend wird das Dekor des im Labor hergestellten Plattenkörpers mit der ursprünglichen Dekorvorlage verglichen. Die einzelnen Farben für die einzelnen Zylinder werden in weiteren Schritten so angepaßt, bis das verpreßte Dekor der Vorlage möglichst nahe kommt.

Des Weiteren ist es häufig so, dass die Dekorfarbe nicht der Vorlage entspricht. Von daher müssen die einzelnen Farbkanäle und die diesbezüglichen Farben überarbeitet werden. Nach entsprechender Änderung wird erneut der Laborzylinder graviert, im Labor tiefgedruckt, geharzt und verpresst. Anschließend wird das Laborergebnis erneut mit der ursprünglichen Vorlage verglichen.

Außerdem kommt es auch vor, dass das gedruckte Dekor nur durch Farbangleichung nicht der Vorlage weiter angenähert werden kann. Wenn die Dekorvorlage trotz genauester Farbanpassung der einzelnen Zylinder nicht mit dem Laborzylindersatz erreicht werden kann, ist es in der Regel erforderlich, dass die Laborzylinder in ihrer Gravur überarbeitet werden müssen.

Da die Änderung der Laborzylinder und die Einstellung der richtigen Farbkanäle üblicherweise einige Tage in Anspruch nimmt und der Kunde der Dekorvorlage und der Drucker in der Regel nicht in einem Ort ansässig sind, bedeutet die korrekte Dekorerstellung einen erheblichen zeitlichen und kostenmäßigen Aufwand. Dabei ist zu berücksichtigen, dass es nicht selten vorkommt, dass eine Änderung der Farbauswahl und/oder der Gravur der Laborzylinder zwischen fünf- bis zehn-und zum Teil sogar mehr als zehnmal stattfindet, bis das gewünschte Dekor erstellt ist.

Ist das richtige Dekor von der Gravur und der Farbauswahl im Labormaßstab gefunden, werden die Labordaten hinsichtlich der Gravur und der Farbauswahl in Produktionsdaten überarbeitet. Anschließend erfolgt die Gravur der Produktionszylinder. Besondere Probleme bereitet in diesem Zusammenhang vor allem das Nachstellen der am Laborzylinder festgestellten Farbstellung für die drei Kanäle bzw. drei Produktionszylinder. Anschließend kann mit der Produktion begonnen werden.

Es ist erkennbar, dass der Aufwand zum Erstellen eines Dekors und Einrichten einer Produktions-Tiefdruckvorrichtung mit erheblichem Aufwand verbunden ist.

Darüber hinaus ergibt sich beim Dekortiefdruck der Nachteil, dass, wenn die Farbmischung eines Farbkanals eines Produktionszylinders aufgebraucht ist, oder wenn das Dekor erneut produziert werden muss, es schwierig ist, den korrekten Farbton wieder nachzustellen. Die bei den üblichen Dekoren eingesetzten Farben der einzelnen Farbkanäle sind keine standardisierten Farben, sondern Farbmischungen. Da es gerade im Bereich der Holzdekore darauf ankommt, reproduzierbare Druckergebnisse zu haben, ergibt sich in der Produktion häufig eine Produktionspause von einigen Stunden, bis die korrekte Farbauswahl wieder vorlegt.

Die EP 1 858 244 A1 offenbart eine Vorrichtung zur Herstellung eines Plattenkörpers mit einer ersten Druckstraße, in der ein Dekor als Musterdruck mittels eines Inkjet-Druckers auf ein erstes Trägermaterial aufgebracht wird. Des Weiteren ist eine zweite Druckerstraße vorgesehen, in der das Dekor mittels einer Tiefdruckeinrichtung auf ein zweites Trägermaterial aufgebracht wird. Diese Vorrichtung umfasst des Weiteren eine Rechnereinrichtung zur Umwandlung von einem ersten Datensatz in einem zweiten Datensatz, wobei die Druckzylinder der Tiefdruckeinrichtung auf der Grundlage vom zweiten Datensatz graviert sind. Der erste Datensatz wird durch Abfotografieren einer Dekorvorlage mittels einer Digitalkamera gewonnen. Die WO 2008/110275 A1 offenbart ein Verfahren zur Herstellung eines flä gen Bauteils, wobei auf einen flächigen Grundkörper des Bauteils eine beharzte, bedruckbare oder bedruckte Papierschicht unter Druck und Hitzeeinfluss aufgebracht wird. Die Papierschicht wird nicht vollständig durchbeharzt, so dass die oberseitige Druckseite der Papierschicht zumindest im Wesentlichen harzfrei ist.

Aus der EP 0 054 405 A1 ist ein Verfahren zur Herstellung eines Laminats mit einer dekorativen Papierschicht bekannt, wobei eine flüssige Beschichtung mit einem Farbpigment und einem Binder auf die Papierschicht aufgebracht ist und die beschichtete Papierschicht eine bestimmte Porosität aufweist.

In der EP 0 675 536 A2 wird ein Verfahren zur Reproduzierung eines originalen Farbbildes auf einer Druckeinrichtung offenbart, wobei jedes Pixel des originalen Farbbildes in eine Vielzahl von Farbkomponenten unterteilt ist und ein bestimmter Dichtewert für jede Farbkomponente des einzelnen Farbpixels erhalten wird.

Die US 5,283,671 betrifft ein Drucksystem mit einem Scanner, wobei ein zu dem eingescannten Bild korrespondierendes RGB-Signal erzeugt wird. Anschließend wird das RGB-Signal durch eine Recheneinrichtung verarbeitet, so dass das RGB-Signal in ein individuelles CMYK-Signal konvertiert wird.

Aus der DE 199 47 397 A1 ist ein Verfahren zur nahtlosen Gravur eines Musters und einer elektronischen Graviermaschine bekannt. Ein Graviersteuersignal steuert ein Gravierorgan, wobei das Gravierorgan linienweise eine Folge von Näpfchen in einen rotierenden Druckzylinder eingraviert.

Aufgabe der vorliegenden Erfindung ist es, eine Vorrichtung zur Herstellung von Plattenkörpern für den Boden-, Wand- oder Deckenbereich sowie für den Möbelbereich zur Verfügung zu stellen, wobei der Zeit- und Kostenaufwand im Rahmen der Produktionsvorbereitung optimiert und gleichzeitig die Reproduzierbarkeit und Druckqualität des Dekordrucks während des Betriebes der Vorrichtung sichergestellt ist.

Die vorgenannte Aufgabe ist bei einer Vorrichtung der eingangs genannten Art durch die Merkmale des Anspruchs 1 gelöst. Vorteilhafte Weiterbildungen sind Gegenstand der Unteransprüche.

Die erfindungsgemäße Vorrichtung zur Durchführung eines Verfahrens zur Herstellung von Plattenkörperm weist eine eine Anzeigeeinrichtung aufweisende Rechnereinrichtung zur Umwandlung von im RGB-Farbsystem angezeigten RGB-Daten in CMYK-Daten des CMYK-Farbsystems und eine auf der Grundlage der CMYK-Daten gravierten Druckzylinder aufweisende Tiefdruckeinrichtung auf. Die erfindungsgemäße Vorrichtung unterscheidet sich vom Stand der Technik letztlich durch die Verwendung von Druckzylindern, die zum Tiefdruck der Farben CMYK vorgesehen sind, wobei die Druckfarbenreihenfolge der Druckzylinder Y (Yellow), C (Cyan), M (Magenta) und K (Schwarz als Farbtiefe) ist.

Im übrigen weist die erfindungsgemäße Vorrichtung vorzugsweise wenigstens einen Proof-Digital-Drucker als Digitaldruckeinrichtung auf, der mit der Rechnereinrichtung gekoppelt ist. Die beim Proofdrucker und den Druckzylindern der Tiefdruckeinrichtung verwendeten Druckfarben sind, was die Farbpigmente und/oder Farbzusammensetzungen angeht, identisch.

Zu der erfindungsgemäßen Gesamtvorrichtung gehört, auch wenn sich dies möglicherweise nicht an einem einzelnen Produktionsort befindet, noch eine Beharzungseinrichtung zum Beharzen des bedruckten oder bedruckbaren Papiers, eine Zerteil- oder Schneideinrichtung zum Zerteilen bzw. Schneiden des beharzten Druckpapiers in Druckbögen und eine Preßeinrichtung zum Verpressen der Druckbögen mit den einzelnen Grundkörpern.

Anders als beim Stand der Technik, wo die RGB-Daten in einzelne Kanäle bzw. Laborzylinder aufgeteilt werden, wobei der Farbraum aus drei (Misch-)Farben besteht, ist es bei der Erfindung nun so, dass auf das CMYK-Farbsystem zurückgegriffen wird. Die RGB-Daten werden hierzu in CMYK-Daten umgerechnet. Da auf ein anderes Farbsystem als beim bekannten Dekortiefdruckverfahren zurückgegriffen wird, ist es grundsätzlich sogar möglich, auf Versuche im Labormaßstab und den Einsatz einer Labor-Tiefdruckeinrichtung zu verzichten, wenngleich es bei der Erfindung natürlich auch möglich ist, gemäß dem erfindungsgemäßen Prinzip die in CMYK-Daten umgewandelten RGB-Daten in entsprechende Laborzylinder zu gravieren. Grundsätzlich ist dies jedoch nicht unbedingt erforderlich.

Im Ergebnis bietet die Erfindung den ganz wesentlichen Vorteil, dass mit der Produktion im Tiefdruck nach Erstellen der Dekorvorlage auf einer Anzeigeeinrichtung eines Rechners im RGB-Farbsystem sehr viel schneller begonnen werden kann. Die Farbausmusterung des bekannten Verfahrens mit drei Kanälen, über die drei immer wieder neu zusammenzustellende Mischfarben eingesetzt werden, entfällt hier vollständig. Letztlich wird bei der Erfindung auf einen Vierfarbendruck zurückgegriffen, bei dem die jeweils eingesetzte Farbe konstant bzw. gleichbleibend ist. Dabei kann es so sein, dass im CMYK-Farbsystem die hellste Druckfarbe zuerst gedruckt wird. Es werden dann vier Druckzylinder eingesetzt, bei denen die Druckfarbenreihenfolge Y (Yellow), C (Cyan), M (Magenta) und K (Key-Schwarz als Farbtiefe) ist. Die Farbreihenfolge kann aber auch K, C, M, Y sein, wobei auch andere Reihenfolgen grundsätzlich möglich sind. Unabhängig von der Druckfarbenreihenfolge ist der Farbraum durch die vorgenannten vier Farben zwar beschränkt, jedoch ist festgestellt worden, dass sich selbst aufwendige Holzdekore problemlos über das CMYK-Farbsystem darstellen lassen.

Üblicherweise wird eine Dekorvorlage, die als Dekor für Plattenkörper vorgesehen ist, zunächst manuell und/oder elektronisch vorbereitet. Unter dem Ausdruck "Vorbereitung" können im Ergebnis alle Vorgänge verstanden werden, über die ein Dekorbild hergestellt werden kann. Dies reicht von dem manuellen Zeichnen, was sehr aufwendig ist, bis zum einfachen Ausschneiden eines bereits vorhandenen Bildes. Bei der Dekorvorlage kann es sich beispielsweise auch um einen entsprechenden Schnitt durch einen Baumstamm handeln. Um die körperlich vorliegende bzw. vorbereitete Dekorvorlage in elektronischer Form bearbeiten zu können, wird diese eingescannt.

Ein wesentlicher Punkt der Bearbeitung besteht darin, dass sich über den Umfang des Druckzylinders eine sog. Rapportierung ergibt, so dass sich ein fortlaufendes, sich wiederholendes Dekorbild beim Druck ergibt. Dementsprechend werden die Daten der eingescannten Dekorvorlage entsprechend überarbeitet.

Vor oder nach der Überarbeitung zur Rapportierung wird verfahrensgemäß eine manuelle Farbmusterung der an der Anzeigeeinrichtung angezeigten Dekorvorlage vorgenommen. Die Farbmusterung, die letztlich am Bildschirm bzw. der Anzeigeeinrichtung der Rechnereinrichtung vorgenommen wird, erfolgt auf Basis des RGB-Farbsystems. Sobald die gewünschte Dekorfarbe erreicht ist, wird ein Proof der an der Anzeigeeinrichtung angezeigten Dekorvorlage mittels eines Digitalproofdruckers erstellt. Der Proof basiert auf dem CMYK-Farbsystem, dessen Farbraum durch die vorgenannten vier Farben eingeschränkt ist. Dementsprechend differiert in der Regel die Dekorfarbe des Proofs mit der über das RGB-Farbsystem auf der Anzeigeeinrichtung angezeigten Dekorfarbe.

Um eine schnelle Angleichung zwischen der Dekorfarbe des Proofs und der auf der Anzeigeeinrichtung dargestellten Dekorfarbe zu erzielen, wird eine automatische Kalibrierung vorgenommen. Hierzu kann ein Kalibrierungschart eingescannt werden, wobei die Farbdaten des Charts automatisch mit den RGB-Farbdaten verglichen und dann über entsprechende Korrekturfaktoren entsprechend angepasst bzw. abgeglichen werden.

Nach der Kalibrierung kann es sich anbieten, dass ein weiterer Chart unter Berücksichtigung der kalibrierten CMYK-Daten erstellt wird. Dieser wird dann erneut mit dem im RGB-Farbsystem auf der Anzeigeeinrichtung dargestellten Dekor verglichen. Dieser Vorgang kann dann bedarfsweise mehrfach wiederholt werden, bis die Dekorfarbe des Charts der Dekorfarbe des auf der Anzeigeeinrichtung angezeigten Dekors entspricht.

In der Regel handelt es sich bei den im CMYK-Farbsystem eingesetzten Farben um definierte Farben. Dennoch kann es grundsätzlich Abweichungen geben. Da im Dekortiefdruck insbesondere für Holzdekore eine hohe Farbgenauigkeit und -echtheit erforderlich ist, bietet es sich besonders an, dass die gleichen Farbpigmente und/oder Farbzusammensetzungen für die Druckfarben des Proofdruckers und die Druckfarbe der Druckzylinder der Tiefdruckeinrichtung verwendet werden. Durch die gleichen Farbpigmente und/oder Farbzusammensetzungen ist, auch wenn die Druckfarben im Hinblick auf das Auftragsverfahren beim Digitaldruck einerseits und im Tiefdruck andererseits unterschiedlich sind, eine hohe Farbechtheit und Wiederholbarkeit der Dekorfarben gewährleistet.

Ein erfindungsgemäß hergestellter Plattenkörper zur Verwendung im Boden-, Wand- oder Deckenbereich, wie Paneelen, sowie im Möbelbereich, weist einen Grundkörper und einen ein Dekor aufweisenden Druckbogen auf, der über eine Harzschicht mit dem Grundkörper verpresst ist, wobei der Druckbogen im Dekortiefdruckverfahren im CMYK-Farbsystem bedruckt worden ist. Der erfindungsgemäße Plattenkörper unterscheidet sich damit von bekannten Plattenkörpern in der Art der Bedruckung der einzelnen Druckbögen, die, anders als im Stand der Technik im Dekortiefdruckverfahren im CMYK-Farbsystem bedruckt worden sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich und in beliebiger Kombination den Gegenstand der vorliegenden Erfindung, unabhängig von ihrer Zusammenfassung in den Ansprüchen oder deren Rückbeziehung.

Es zeigt
- Fig. 1: eine schematische Darstellung eines Verfahrens zur Herstellung von Plattenkörpern,
- Fig. 2: eine schematische Darstellung einer Dekortiefdruckeinrichtung einer erfindungsgemäßen Vorrichtung und
- Fig. 3: eine schematische Darstellung eines Plattenkörpers.

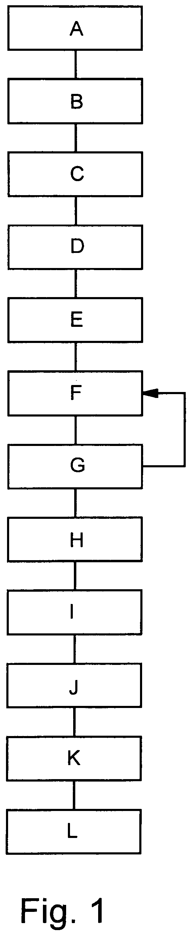

In Fig. 1 ist ein Verfahren des Dekortiefdrucks schematisch mit den einzelnen Verfahrensschritten dargestellt. Zunächst wird im Verfahrensschritt A eine Dekorvorlage vorbereitet. Dies kann manuell und/oder elektronisch erfolgen. Als Dekor der Vorlage handelt es sich üblicherweise um eine bestimmte Holzmaserung.

Nach Erstellung der Vorlage wird diese dann im Schritt B eingescannt. Es ist darauf hinzuweisen, dass es grundsätzlich auch möglich ist, dass die Vorlage bereits elektronisch, das heißt an einem Rechner, erstellt wird, so dass das Einscannen entfallen kann.

Anschließend erfolgt im Schritt C eine Überarbeitung der Vorlage an einer Rechnereinrichtung.

Im Schritt D wird das erstellte Design dann dahingehend überarbeitet, dass sich eine Rapportierung ergibt mit der Folge, dass das Design sich quasi ständig wiederholt. Hinzuweisen ist darauf, dass der Schritt D allerdings nicht unbedingt erforderlich ist, da es Dekore gibt, die nicht unendlich gedruckt werden müssen, eine Rapportierung also nicht zwangsweise notwendig ist.

Nachdem das Design an eine Anzeigeeinrichtung der Rechnereinrichtung überarbeitet worden ist und das Design in der gewünschten Form von der Anzeigeeinrichtung im RGB-Farbsystem angezeigt wird, erfolgt im Schritt E eine Umwandlung der RGB-Daten durch die Rechnereinrichtung in CMYK-Daten des CMYK-Farbsystems. Bei der Umwandlung werden die RGB-Daten automatisch von der Rechnereinrichtung in CMYK-Daten umgewandelt.

Anschließend wird im Schritt F ein Proof, das heißt ein Farbausdruck, auf einem Proof-Drucker erstellt. Bei dem Proof-Drucker handelt es sich um einen Digital-drucker. Ebenfalls im Schritt F wird eine manuelle und/oder automatische Farbmusterung des gedruckten Proofs mit dem auf der Anzeigeeinrichtung der Rechnereinrichtung im RGB-Farbsystem dargestellten Dekor vorgenommen.

Da das im RGB-Farbsystem dargestellte Design in der Regel vom im CMYK-Farbsystem dargestellten Design abweicht, wird eine Kalibrierung im Schritt G vorgenommen. Hierbei handelt es sich um einen automatischen Abgleich der Farben des auf der Anzeigeeinrichtung dargestellten Designs entsprechend den RGB-Farbsystem und des auf dem Proof gedruckten Designs entsprechend dem CMYK-Farbsystem. Hierzu kann das Design und/oder die Farben eines Kalibrierungscharts eingescannt werden, so dass über die Rechnereinrichtung unmittelbar die einzelnen Farben verglichen werden können. Dabei werden Ausgleichsfaktoren zur Farbenkorrektur berechnet. Auf der Grundlage des Kalibrierungsergebnisses werden dann die CMYK-Daten entsprechend angepasst. Dieser Vorgang kann mehrfach wiederholt werden.

Da das CMYK-Farbsystem auf standardisierten Farben beruht, ist es grundsätzlich sogar möglich, dass die Umwandlung der Daten im Schritt E unter Berücksichtigung von bereits ermittelten bzw. vorbestimmten Kalibrierungsfaktoren erfolgt, die bereits die Abweichungen der Farben des im CMYK-Farbsystem gedruckten Proofs mit den im RGB-Farbsystem dargestellten Farben des auf der Anzeigeeinrichtung dargestellten Designs von vornherein berücksichtigt.

Anschließend erfolgt im Schritt H die Gravur der einzelnen Druckzylinder auf der Grundlage der CMYK-Daten, die von der Rechnereinrichtung unter Berücksichtigung des oder der Kalibrierungsfaktoren errechnet worden sind.

Nach der Gravur kann mit dem Druck des Druckpapiers im Schritt I begonnen werden. Es ergibt sich dann ein quasi unendliches Druckpapier mit sich auf dem Druckpapier entsprechend wiederholendem Dekor.

Nach dem Dekortiefdruck wird das bedruckte Druckpapier im Schritt J beharzt. Dazu wird das üblicherweise auf einer Rolle befindliche bedruckte Druckpapier abgerollt, durchläuft ein Harzbad und wird nach dem Trocknen wieder aufgerollt.

Im Schritt K erfolgt das Schneiden des Druckpapiers zu einer Vielzahl von Druckbögen. Das Druckpapier wird dazu jedenfalls in Längs-, in der Regel auch in Querrichtung zerteilt, so dass sich die einzelnen Druckbögen ergeben, deren Flächenabmaße den Flächenabmaßen der Grundkörper der Plattenkörper entsprechen.

Bei den Grundkörpern kann es sich um Körper aus Holz- oder Holzwerkstoffplatten, insbesondere HDF-, MDF-, Span- oder OSB-Platten, aber auch um Gipskarton- oder Gipsfaserplatten oder auch Kunststoffplatten handeln. Auch andere Materialien sind ohne weiteres möglich. Auf die Herstellung dieser Platten wird im Einzelnen nicht eingegangen. Deren Herstellung ist im Stand der Technik grundsätzlich bekannt.

Im Schritt L werden die Druckbögen mit den Grundkörpern, beispielsweise in einer KT-Preßeinrichtung, verpresst. Dabei kann gleichzeitig eine sich oberhalb des Druckbogens befindliche Schutzschicht mit verpresst werden.

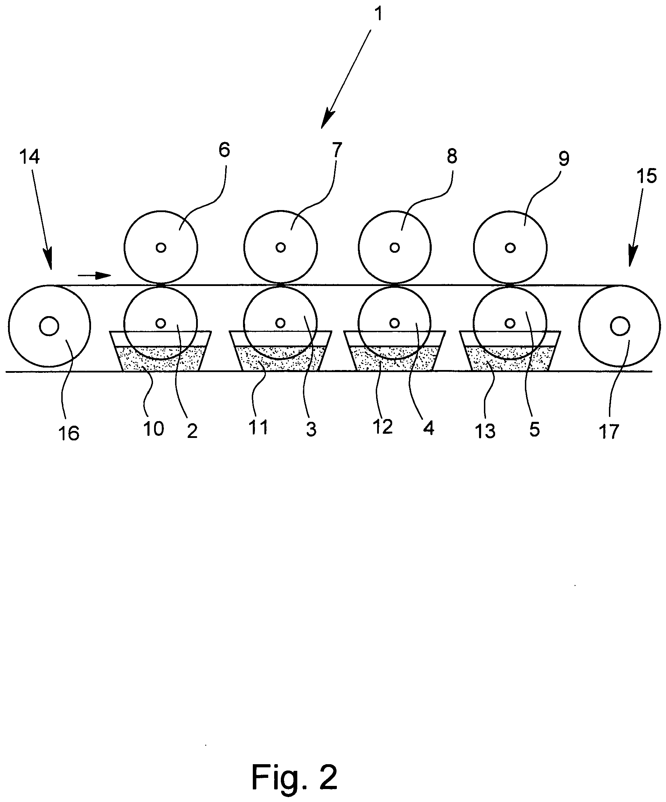

In Fig. 2 ist eine Dekortiefdruckeinrichtung 1 einer erfindungsgemäßen Vorrichtung dargestellt. Die Tiefdruckeinrichtung 1 weist vier gravierte Druckzylinder 2, 3, 4, 5 auf. Jedem Druckzylinder 2, 3, 4, 5 ist ein ungravierter Gegendruckzylinder 6, 7, 8, 9 zugeordnet. Im übrigen taucht jeder der Druckzylinder 2, 3, 4, 5 in einen Farbbehälter 10, 11, 12 ,13 ein. Dabei befindet sich im Farbbehälter 10 die Farbe gelb (Y), im Farbbehälter 11 die Farbe cyan (C), im Farbbehälter 12 die Farbe magenta (M) und im Farbbehälter 13 die Farbe schwarz (K). Den Druckzylindern 2, 3, 4, 5 vorgeschaltet ist eine Abwickeleinrichtung 14, nachgeschaltet ist eine Aufwickeleinrichtung 15. Von der Abwickeleinrichtung 14 wird unbedrucktes Druckpapier 16 abgewickelt, das anschließend im Tiefdruckverfahren durch die Druckzylinder 2, 3, 4, 5 bedruckt wird. Anschließend wird das bedruckte Druckpapier 17 wieder aufgewickelt.

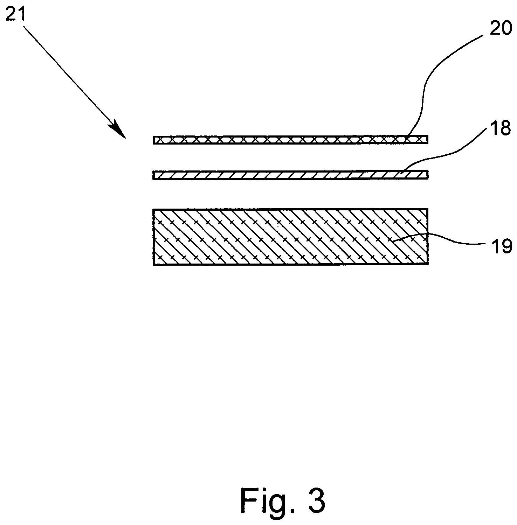

Wie zuvor bereits ausgeführt worden ist, wird das bedruckte Druckpapier 17 nach dem Bedrucken beharzt und anschließend geschnitten, so dass sich Druckbögen 18 ergeben, von denen einer schematisch in Fig. 3 dargestellt ist. Der Druckbogen 18 wird mit dem Grundkörper 19 und einer Schutzschicht 20 zu einem Plattenkörper 21 verpreßt, der anschließend beispielsweise als Paneele im Boden-, Wand- oder Deckenbereich oder aber als Möbelteil im Möbelbereich eingesetzt werden kann.

### Bezugszeichenliste

- 1: Tiefdruckeinrichtung
- 2: Druckzylinder
- 3: Druckzylinder
- 4: Druckzylinder
- 5: Druckzylinder
- 6: Gegendruckzylinder
- 7: Gegendruckzylinder
- 8: Gegendruckzylinder
- 9: Gegendruckzylinder
- 10: Farbbehälter
- 11: Farbbehälter
- 12: Farbbehälter
- 13: Farbbehälter
- 14: Abwickeleinrichtung
- 15: Aufwickeleinrichtung
- 16: unbedrucktes Druckpapier
- 17: bedrucktes Druckpapier
- 18: Druckbogen
- 19: Grundkörper
- 20: Schutzschicht
- 21: Plattenkörper

- A: Vorbereitung
- B: Scannen
- C: Überarbeitung
- D: Rapportierung
- E: Umwandlung
- F: Farbmusterung Proof
- G: Kalibrierung
- H: Gravur
- I: Druck
- J: Beharzen
- K: Schneiden
- L: Pressen

## Patentansprüche

1. Vorrichtung zur Durchführung eines Verfahrens zur Herstellung von Plattenkörpern (21) zur Verwendung im Boden-, Wand- oder Deckenbereich, wie Paneelen, sowie im Möbelbereich, wobei der Plattenkörper (21) einen Grundkörper (19) aufweist, der mit einem beharzten, ein Dekor aufweisenden Druckbogen (18) aus bedruckten Druckpapier verpresst wird, mit einer eine Anzeigeeinrichtung aufweisenden Rechnereinrichtung zur Umwandlung von im RGB-Farbsystem angezeigten RGB-Daten in CMYK-Daten des CMYK-Farbsystems und mit einer auf der Grundlage von CMYK-Daten gravierten Druckzylindern (2, 3, 4, 5) aufweisenden Tiefdruckeinrichtung (1), so dass die RGB-Daten von der Rechnereinrichtung in CMYK-Daten des CMYK-Farbsystems umwandelbar sind und die Druckzylinder auf der Grundlage der CMYK-Daten gravierbar sind, wobei das Druckpapier mit einem sich auf dem Druckpapier vielfach wiederholenden Dekor im Tiefdruckverfahren mittels der die gravierten Druckzylinder (2, 3, 4, 5) aufweisenden Tiefdruckeinrichtung (1) bedruckt und das Druckpapier vor dem Verpressen in eine Vielzahl von Druckbögen (18) zerteilt wird und wobei vor dem Druck des Dekors eine Dekorvorlage vorbereitet und auf der Anzeigeeinrichtung der Rechnereinrichtung im RGB-Farbsystem angezeigt wird.

2. Vorrichtung nach Anspruch 1, **dadurch gekennzeichnet, dass** vier Druckzylinder (2, 3, 4, 5) vorgesehen sind und dass die Druckfarbenreihenfolge gelb (Y), cyan (C), magenta (M) und schwarz (K) oder schwarz (K), cyan (C), magenta (M) und gelb (Y) ist.

3. Vorrichtung nach Anspruch 1 oder 2, **dadurch gekennzeichnet, dass** die vorbereitete Dekorvorlage mittels einer Scanneinrichtung eingescannt wird und dass, vorzugsweise, die Daten der eingescannten Dekorvorlage zur Rapportierung an einer Rechnereinrichtung überarbeitet werden.

4. Vorrichtung nach einem der vorhergehenden Ansprüche, **dadurch gekennzeichnet, dass** eine Farbmusterung des an der Anzeigeeinrichtung angezeigten Dekors vorgenommen wird.

5. Vorrichtung nach einem der vorhergehenden Ansprüche, **dadurch gekennzeichnet, dass** ein Proof des an der Anzeigeeinrichtung angezeigten Dekors mittels eines Digitalproofdruckers erstellt wird.

6. Vorrichtung nach einem der vorhergehenden Ansprüche, **dadurch gekennzeichnet, dass** die Farben und/oder das Design eines Kalibrierungscharts zur Kalibrierung der von der Rechnereinrichtung umgewandelten CMYK-Daten verwendet werden.

7. Vorrichtung nach Anspruch 6, **dadurch gekennzeichnet, dass** nach der Kalibrierung ein weiterer Kalibrierungschart aufgrund kalibrierter CMYK-Daten erstellt wird.

8. Vorrichtung nach einem der vorhergehenden Ansprüche, **dadurch gekennzeichnet, dass** die gleichen Farbpigmente und/oder Farbzusammensetzungen für die Druckfarben des Proofdruckers und der Druckzylinder (2, 3, 4, 5) der Tiefdruckeinrichtung (1) verwendet werden.

9. Vorrichtung nach einem der vorhergehenden Ansprüche, **dadurch gekennzeichnet, dass** eine Beharzungseinrichtung zum Beharzen des bedruckten oder bedruckbaren Druckpapiers vorgesehen ist.

10. Vorrichtung nach einem der vorhergehenden Ansprüche, **dadurch gekennzeichnet, dass** eine Zerteileinrichtung zum Zerteilen des beharzten Druckpapiers in Druckbögen vorgesehen ist.

11. Vorrichtung nach einem der vorhergehenden Ansprüche, **dadurch gekennzeichnet, dass** eine Preßeinrichtung zum Verpressen von Druckbögen (18) mit Grundkörpern (19) vorgesehen ist.

## Claims

1. Device for performing a method for manufacturing plate-shaped bodies (21) for application in the range of floors, walls or ceilings, such as panels, as well as in the furniture range, wherein the plate-shaped body (21) comprises a basic body (19), which is pressed together with a printing sheet (18) of printed printing paper, which printing sheet is provided with resin and comprises a decor, with a computer device having a display device, for converting RGB data indicated in the RGB color system into CMYK data of the CMYK color system and with a gravure printing device (1) comprising engraved printing cylinders (2, 3, 4, 5), said cylinders being engraved on the basis of CMYK data, such that the RGB data of the computer device can be converted into CMYK data of the CMYK color system and the printing cylinders can be engraved on the basis of the CMYK data, wherein the printing paper, by gravure printing by means of the gravure printing device (1) comprising the engraved printing cylinders (2, 3, 4, 5), is imprinted with a decor which is repeated on the printing paper a plurality of times, and the printing paper, prior to pressing, is divided into a plurality of printing sheets (18), and wherein, prior to printing the decor, a decor pattern is prepared and is displayed on the display device of the computer device in the RGB color system.

2. Device according to claim 1, **characterized in that** four printing cylinders (2, 3, 4, 5) are provided and that the sequence of the printing colors is yellow (Y), cyan (C), magenta (M) and black (K) or black (K), cyan (C), magenta (M) and yellow (Y).

3. Device according to claim 1 or 2, **characterized in that** the prepared decor pattern is scanned in by means of a scanning device and that preferably the data of the scanned-in decor pattern are revised for repeat determination in a computer device.

4. Device according to any of the preceding claims, **characterized in that** a color matching of the decor displayed on the display device is performed.

5. Device according to any of the preceding claims, **characterized in that** a proof of the decor displayed on the display device is made by means of a digital proof printer.

6. Device according to any of the preceding claims, **characterized in that** the colors and/or the design of a calibration chart are applied for calibration of the CMYK data converted by the computer device.

7. Device according to claim 6, **characterized in that** after calibration, a further calibration chart on the basis of calibrated CMYK data is made.

8. Device according to any of the preceding claims, **characterized in that** the same color pigments and/or color compositions are used for the printing inks of the proof printer and the printing cylinders (2, 3, 4, 5) of the gravure printing device (1).

9. Device according to any of the preceding claims, **characterized in that** a resinating device is provided for treating the printed or printable printing paper with resin.

10. Device according to any of the preceding claims, **characterized in that** a dividing device is provided for dividing the printing paper, which is provided with resin, into printing sheets.

11. Device according to any of the preceding claims, **characterized in that** a pressing device is provided for pressing printing sheets (18) together with basic bodies (19).

## Revendications

1. Dispositif pour la mise en oeuvre d'un procédé pour la fabrication de corps en forme de plaques (21) pour son utilisation dans le domaine des sols, des murs ou des plafonds, tels que des panneaux, et également dans le domaine du mobilier, dans lequel le corps en forme de plaque (21) présente un corps de base (19) qui est comprimé avec une feuille d'impression (18) enduite de résine, présentant une décoration, constituée de papier d'impression imprimé, comprenant un ordinateur présentant un mécanisme d'affichage pour la transformation de données RGB affichées dans le système de couleurs RGB en données CMYK du système de couleurs CMYK et comprenant un mécanisme d'impression en creux (1) présentant des cylindres d'impression gravés (2, 3, 4, 5), gravés sur la base de données CMYK d'une manière telle que les données RGB peuvent être transformées par l'ordinateur en données CMYK du système de couleurs CMYK et les cylindres d'impression peuvent être gravés sur la base des données CMYK, dans lequel le papier d'impression est imprimé avec une décoration qui se répète à de multiples reprises sur le papier d'impression dans le procédé d'impression en creux au moyen du mécanisme d'impression en creux (1) présentant les cylindres d'impression gravés (2, 3, 4, 5) et le papier d'impression est subdivisé, avant la compression, en une multitude de feuilles d'impression (18), et dans lequel, avant l'impression de la décoration, on prépare un original de décoration et on l'affiche sur un mécanisme d'affichage de l'ordinateur dans le système de couleurs RGB.

2. Dispositif selon la revendication 1, **caractérisé en ce qu'**on prévoit quatre cylindres d'impression (2, 3, 4, 5) et **en ce que** la succession des couleurs d'impression est : jaune (Y), bleu-vert (C), magenta (M) et noir (K) ou noir (K), bleu-vert (C), magenta (M) et jaune (Y).

3. Dispositif selon la revendication 1 ou 2, **caractérisé en ce que** l'original de décoration préparé est scanné au moyen d'un mécanisme de balayage, et **en ce que**, de préférence, les données de l'original de décoration scannées sont retravaillées pour être rapportées à un ordinateur.

4. Dispositif selon l'une quelconque des revendications précédentes, **caractérisé en ce qu'**on procède à un échantillonnage des couleurs de la décoration affichée sur le mécanisme d'affichage.

5. Dispositif selon l'une quelconque des revendications précédentes, **caractérisé en ce qu'**on prépare une épreuve de la décoration affichée sur le mécanisme d'affichage au moyen d'une imprimante numérique d'épreuves.

6. Dispositif selon l'une quelconque des revendications précédentes, **caractérisé en ce qu'**on utilise les couleurs et/ou le motif d'un diagramme d'étalonnage pour l'étalonnage des données CMYK transformées par l'ordinateur.

7. Dispositif selon la revendication 6, **caractérisé en ce que**, après l'étalonnage, on prépare un diagramme d'étalonnage supplémentaire sur la base de données CMYK étalonnées.

8. Dispositif selon l'une quelconque des revendications précédentes, **caractérisé en ce qu'**on utilise les mêmes pigments de couleurs et/ou les mêmes compositions de couleurs pour les couleurs d'impression de l'imprimante d'épreuves et des cylindres d'impression (2, 3, 4, 5) du mécanisme d'impression en creux (1).

9. Dispositif selon l'une quelconque des revendications précédentes, **caractérisé en ce qu'**on prévoit un mécanisme d'enduction d'une résine pour l'enduction d'une résine sur le papier d'impression imprimé ou apte à être imprimé.

10. Dispositif selon l'une quelconque des revendications précédentes, **caractérisé en ce qu'**on prévoit un mécanisme de répartition pour la répartition en feuilles d'impression du papier d'impression enduit d'une résine.

11. Dispositif selon l'une quelconque des revendications précédentes, **caractérisé en ce qu'**on prévoit un mécanisme de compression pour la compression de feuilles d'impression (18), avec des corps de base (19).
